# EUROPEAN PATENT SPECIFICATION

(11) **EP 2 655 092 B1**
(45) Date of publication and mention of the grant of the patent: **05.11.2014**
(21) Application number: 11815593.6
(22) Date of filing: 23.12.2011
(51) Int. Cl.: B60C 1/00, C08K 3/36, C08K 5/47, C08F 8/42, C08K 5/548, C08K 9/12

(54) **TREAD COMPOUND COMPRISING TRIALKOXYMERCAPTOALKYL-SILANES**
LAUFFLÄCHENVERBUND MIT TRIALKOXYMERCAPTOALKYLSILANEN
COMPOSÉ POUR CHAPE COMPRENANT DES TRIALKOXYMERCAPTOALKYLE-SILANES

(30) Priority: 23.12.2010 IT TO20101056
(43) Date of publication of application: 30.10.2013
(73) Proprietor: Bridgestone Corporation, Chuo-ku Tokyo 104-8340 (JP)
(72) Inventor: PRIVITERA, Davide, I-67051 Avezzano (IT)
(74) Representative: Bosman, Cesare
(86) International application number: PCT/IB2011/055953
(87) International publication number: WO 2012/085895

(56) References cited:
- EP-A1- 2 105 461
- EP-A1- 2 128 186
- WO-A1-2009/092811
- US-A- 5 798 009
- US-A- 6 095 217
- US-A- 6 096 833
- US-A1- 2007 185 239
- US-A1- 2008 161 458
- US-B1- 6 180 703
- US-B1- 6 376 587

## Description

### TECHNICAL FIELD

The present invention relates to a tread compound comprising trialkoxymercaptoalkyl-silanes.

### BACKGROUND ART

In certain compounds, such as tread compounds, silica has long been substituted for conventional carbon black as a reinforcing filler, because of its advantages in terms of rolling resistance and wet road-holding performance.

Silica is used in combination with silane coupling agents, which bond with silanol groups to prevent the formation of hydrogen bonds between silica particles, and at the same time bond the silica chemically to the polymer base.

As silane coupling agents, mercaptoalkyl-silanes have recently been found to further improve compounds in terms of both rolling resistance and hydrocarbon emissions.

The following, in particular, has proved highly effective :

SH(CH₂)₃Si(OCH₂CH₃)(O(CH₂CH₂O)₅(CH₂)₁₃CH₃)₂

Alongside the above advantages, however, trialkoxymercaptoalkyl-silanes have the drawbacks of increasing the viscosity of the compound, and so making it harder to process, impairing wet road-holding performance, and reducing abrasion resistance.

One attempt to solve these problems has been to use large-area (170-230 m²/g) silica. This, however, while improving wet road-holding performance and abrasion resistance, has been found to increase viscosity and so further compound viscosity-related problems.

### DISCLOSURE OF INVENTION

It is an object of the present invention to provide a compound enabling silane coupling agents in the trialkoxymercaptoalkyl-silane class to be used in conjunction with large-area silica, without incurring processing problems, and without compromising other significant characteristics of the compound.

According to the present invention, there is provided a method of producing a rubber compound, comprising a first mixing step of mixing at least one cross-linkable unsaturated-chain polymer base, silica, and a silane coupling agent in the mercaptoalkyl-silane class; and a final mixing step, in which a curing system is added to the mix; said method **being characterised in that** said silane coupling agent is used in adsorbed form on dibenzothiazyl disulphide.

Preferably, at said first mixing step, the mix comprises 10 to 100 phr of silica with a superficial area of 170 to 230 m²/g.

Preferably, at said first mixing step, the mix comprises 1 to 20 phr of a silane coupling agent in the trialkoxymercaptoalkyl-silane class.

Preferably, said silane coupling agent is used in adsorbed form on 0.5 to 6 phr of said dibenzothiazyl disulphide.

Preferably, said silane coupling agent is also used in adsorbed form on 5 to 10 phr of carbon black.

Preferably, said silane coupling agent has the formula (I)

R¹R²₂Si-R³-SH (I)

where :
R¹ represents a linear, cyclic or branched alkoxyl group with 1 to 8 carbon atoms; R² represents a linear, cyclic or branched alkoxyl group with 1 to 8 carbon atoms, or -O-(Y-O)m4-X (where Y represents a linear, cyclic or branched saturated or unsaturated divalent hydrocarbon group with 1 to 20 carbon atoms, X represents a linear, cyclic or branched alkyl group with 1 to 9 carbon atoms, and m4 represents a number of 1 to 40); and R³ represents a linear, cyclic or branched saturated or unsaturated alkylene group with 1 to 12 carbon atoms.

Preferably, said silane coupling agent is in the trialkoxymercaptopropyl-silane class.

Preferably, said silane coupling agent has the formula (II)

SH(CH₂)₃SiR⁴R⁵2 (II)

where :
R⁴ is -OCH₂CH₃, and
R⁵ is -O(CH₂CH₂O)₅(CH₂)₁₃CH₃

### BEST MODE FOR CARRYING OUT THE INVENTION

The following are non-limiting examples for a clearer understanding of the invention.

### EXAMPLES

Three control compounds (A-C) and one compound (D) in accordance with the teachings of the present invention were produced. More specifically, a first control compound (A) is one in accordance with the known art, employing a silane coupling agent not in the trialkoxymercaptoalkyl-silane class; a second control compound (B) is the same as the first, but employing a silane coupling agent in the trialkoxymercaptoalkyl-silane class; and the third control compound (C) is the same as the second, but employing large-area silica.

The compounds were produced as follows :

### - First mixing step -

Before commencing the mixing operation, a 230-270-litre tangential-rotor mixer was loaded with the cross-linkable unsaturated-chain polymer base, the silica, the carbon black, and the silane coupling agent to a fill factor of 66-72%.

In compound D according to the invention, the silane coupling agent was added in adsorbed form on all the carbon black and on dibenzothiazyl disulphide (MBTS).

The mixer was operated at a speed of 40-60 rpm, and the resulting mix was unloaded on reaching a temperature of 140-160°C.

### - Second mixing step -

The mix from the first step was mixed again in a mixer operated at 40-60 rpm, and was unloaded on reaching a temperature of 130-150°C.

### - Third mixing step -

The curing system and zinc oxide were added to the mix from the second step to a fill factor of 63-67%.

The mixer was operated at a speed of 20-40 rpm, and the resulting mix was unloaded on reaching a temperature of 100-110°C.

### - Compound compositions -

Table I shows the compound compositions in parts by weight per hundred parts of total polymer base.

**TABLE I**

| | A | B | C | D |
|---|---|---|---|---|
| S-SBR | 60 | 60 | 60 | 60 |
| E-SBR | 40 | 40 | 40 | 40 |
| Silica¹ | 80 | 80 | -- | -- |
| Silica² | -- | -- | 100 | 100 |
| Silane coupling agent¹ | 10 | -- | -- | -- |
| Silane coupling agent² | -- | 10 | 10 | -- |
| Carbon black | 7 | 7 | 7 | -- |
| Silane coupling agent² on MBTS/CB | -- | -- | -- | 20* |
| Zinc oxide | 2,5 | 2,5 | 2,5 | 2,5 |
| Antioxidants | 3 | 3 | 3 | 3 |
| Sulphur | 1.75 | 1.75 | 1.75 | 1.75 |
| Accelerants | 2.0 | 2.0 | 2.0 | 2.0 |

| | | | | |
|---|---|---|---|---|
| * indicates 10 phr of silane coupling agent² are added to the mix in adsorbed form on 3 phr of MBTS and 7 phr of carbon black. Silica¹ is marketed by EVONIK as VN3, and has a surface area of 170 m²/g. Silica² is marketed by RHODIA as MP200, and has a surface area of 210 m²/g and 55 nm particle size. Silane coupling agent¹ is marketed by DEGUSSA as S175. Silane coupling agent² is the mercaptosilane of formula I indicated above. | | | | |

### - Laboratory test results -

The above compounds were tested to determine a number of particularly significant parameters.

Table II shows the test results of each parameter for each compound.

The parameters tested were :
- Mooney Scorch at 130°C as per ASTM Standard D1646;
- elasticity modulus (E') and Tanδ as per ASTM Standard D5992, from which wet road-holding and rolling resistance were extrapolated and indexed with respect to compound A;
- abrasion resistance as per DIN Standard 53516, and indexed with respect to compound A;
- viscosity (ML1'+4' at 130°C) as per ASTM Standard D1646, and indexed with respect to compound A.

The values in Table II are indexed with respect to a value of 100 for compound A.

**TABLE II**

| | A | B | C | D |
|---|---|---|---|---|
| SCORCH (min) | 20 | 20 | 20 | 20 |
| E' a 30°C (MPa) | 18 | 16 | 20 | 19 |
| Tanδ 0°C | 0.70 | 0.70 | 0.70 | 0.70 |
| Tanδ 30°C | 0.35 | 0.30 | 0.32 | 0.32 |
| Tanδ 60°C | 0.22 | 0.16 | 0.17 | 0.17 |
| Rolling resistance | 100 | 109 | 107 | 107 |
| Abrasion resistance | 100 | 90 | 100 | 100 |
| Wet road-holding | 100 | 95 | 100 | 100 |
| ML1'+4' a 130°C | 100 | 120 | 140 | 90 |

As shown in Table II, the method according to the invention (compound D) enables silane coupling agents in the trialkoxymercaptoalkyl-silane class to be used in conjunction with large-area silica, without high viscosity compromising the workability of the compound.

As the scorch values show, though MBTS is normally used as an accelerant and so added at the third mixing step, using it at the first mixing step as an adsorbed silane coupling agent support in no way affects curing speed.

## Claims

1. A method of producing a rubber compound, comprising a first mixing step of mixing at least one cross-linkable unsaturated-chain polymer base, silica, and a silane coupling agent in the mercaptoalkyl-silane class; and a final mixing step, in which a curing system is added to the mix; said method being **characterised in that** said silane coupling agent is used in adsorbed form on dibenzothiazyl disulphide.

2. A method of producing a rubber compound, as claimed in Claim 1, **characterized in that**, at said first mixing step, the mix comprises 10 to 100 phr of silica with a superficial area of 170 to 230 m²/g.

3. A method of producing a rubber compound, as claimed in Claim 2, **characterized in that**, at said first mixing step, the mix comprises 1 to 20 phr of a silane coupling agent in the trialkoxymercaptoalkyl-silane class.

4. A method of producing a rubber compound, as claimed in one of the foregoing Claims, **characterized in that** said silane coupling agent is used in adsorbed form on 0.5 to 6 phr of said dibenzothiazyl disulphide.

5. A method of producing a rubber compound, as claimed in one of the foregoing Claims, **characterized in that** said silane coupling agent is also used in adsorbed form on 5 to 10 phr of carbon black.

6. A method of producing a rubber compound, as claimed in one of the foregoing Claims, **characterized in that** said silane coupling agent has the formula (I)
R¹R²₂Si-R³-SH (I)
where :
R¹ represents a linear, cyclic or branched alkoxyl group with 1 to 8 carbon atoms; R² represents a linear, cyclic or branched alkoxyl group with 1 to 8 carbon atoms, or -O-(Y-O)m4-X (where Y represents a linear, cyclic or branched saturated or unsaturated divalent hydrocarbon group with 1 to 20 carbon atoms, X represents a linear, cyclic or branched alkyl group with 1 to 9 carbon atoms, and m4 represents a number of 1 to 40); and R³ represents a linear, cyclic or branched saturated or unsaturated alkylene group with 1 to 12 carbon atoms.

7. A method of producing a rubber compound, as claimed in Claim 6, **characterized in that** said silane coupling agent is in the trialkoxymercaptopropyl-silane class.

8. A method of producing a rubber compound, as claimed in Claim 7, **characterized in that** said silane coupling agent has the formula (II)
SH(CH₂)₃SiR⁴R⁵₂ (II)
where:
R⁴ is -OCH₂CH₃, and
R⁵ is -O(CH₂CH₂O)₅(CH₂)₁₃CH₃

9. A tread compound, **characterized by** being produced using the method as claimed in one of the foregoing Claims.

10. A tread, **characterized by** being produced from the compound as claimed in Claim 9.

11. A tyre comprising a tread as claimed in Claim 10.

## Patentansprüche

1. Verfahren zur Herstellung einer Kautschukverbindung, umfassend einen ersten Mischen-Schritt eines Mischens mindestens einer vernetzbaren ungesättigt-kettigen Polymerbasis, Siliziumdioxid und einem Silan-Kupplungsmittel in der Mercaptoalkyl-Silan-Klasse; und einem abschließenden Mischen-Schritt, in welchem ein Härtungssystem zu der Mischung hinzugefügt wird; wobei das Verfahren **dadurch gekennzeichnet ist, dass** das Silan-Kupplungsmittel in adsorbierter Form auf Dibenzothiazyldisulfid verwendet wird.

2. Verfahren zur Herstellung einer Kautschukverbindung nach Anspruch 1, **dadurch gekennzeichnet, dass** die Mischung während des ersten Mischen-Schritts 10 bis 100 phr Siliziumdioxid mit einem Oberflächenbereich von 170 bis 230 m²/g umfasst.

3. Verfahren zur Herstellung einer Kautschukverbindung nach Anspruch 2, **dadurch gekennzeichnet, dass** die Mischung während des ersten Mischen-Schritts 1 bis 20 phr eines Silan-Kupplungsmittels in der Trialkoxymercaptoalkyl-Silan-Klasse umfasst.

4. Verfahren zur Herstellung einer Kautschukverbindung nach einem der vorstehenden Ansprüche, **dadurch gekennzeichnet, dass** das Silan-Kupplungsmittel in adsorbierter Form auf 0,5 bis 6 phr des Dibenzothiazyldisulfids verwendet wird.

5. Verfahren zur Herstellung einer Kautschukverbindung nach einem der vorstehenden Ansprüche, **dadurch gekennzeichnet, dass** das Silan-Kupplungsmittel auch in adsorbierter Form auf 5 bis 10 phr Ruß verwendet wird.

6. Verfahren zur Herstellung einer Kautschukverbindung nach einem der vorstehenden Ansprüche, **dadurch gekennzeichnet, dass** der Silan-Kupplungsmittel die folgende Formel (I) hat:
R¹R²₂Si-R³-SH (I)
wobei:
R¹ eine lineare, zyklische oder verzweigte Alkoxylgruppe mit 1 bis 8 Kohlenstoffatomen darstellt; R² eine lineare, zyklische oder verzweigte Alkoxylgruppe mit 1 bis 8 Kohlenstoffatomen oder -O -(Y-O)m4-X darstellt (wobei Y eine lineare, zyklische oder verzweigte, gesättigte oder ungesättigte zweiwertige Kohlenwasserstoffgruppe mit 1 bis 20 Kohlenstoffatomen darstellt, X eine lineare, zyklische oder verzweigte Alkylgruppe mit 1 bis 9 Kohlenstoffatomen darstellt, und m4 eine Zahl von 1 bis 40 darstellt); und R³ eine lineare, zyklische oder verzweigte, gesättigte oder ungesättigte Alkylengruppe mit 1 bis 12 Kohlenstoffatomen darstellt.

7. Verfahren zur Herstellung einer Kautschukverbindung nach Anspruch 6, **dadurch gekennzeichnet, dass** das Silan-Kupplungsmittel in der Trialkoxymercaptopropyl-Silan-Klasse ist.

8. Verfahren zur Herstellung einer Kautschukverbindung nach Anspruch 7, **dadurch gekennzeichnet, dass** das Silan-Kupplungsmittel die folgende Formel (II) hat:
SH(CH₂)₃SiR⁴R⁵2 (II)
wobei:
R4 -OCH₂CH₃ ist, und
R⁵ -O(CH₂CH₂O)₅(CH₂)₁₃CH₃ ist.

9. Laufflächenverbindung, die **dadurch gekennzeichnet ist, dass** sie durch die Verwendung des Verfahrens nach einem der vorstehenden Ansprüche hergestellt ist.

10. Lauffläche, die **dadurch gekennzeichnet ist, dass** sie aus der Verbindung gemäß Anspruch 9 hergestellt ist.

11. Reifen umfassend eine Lauffläche nach Anspruch 10.

## Revendications

1. Procédé de production d'une composition de caoutchouc, comprenant une première étape de mélange consistant à mélanger au moins un polymère de base à chaîne insaturée réticulable, de la silice, et un agent de couplage du type silane faisant partie de la classe des mercaptoalkyl-silanes ; et une étape finale de mélange, dans laquelle un système de durcissement est ajouté au mélange ; ledit procédé étant **caractérisé en ce que** ledit agent de couplage du type silane est utilisé sous forme adsorbée sur du disulfure de dibenzothiazyle.

2. Procédé de production d'une composition de caoutchouc suivant la revendication 1, **caractérisé en ce que**, dans ladite première étape de mélange, le mélange comprend 10 à 100 phr de silice ayant une surface spécifique de 170 à 230 m²/g.

3. Procédé de production d'une composition de caoutchouc suivant la revendication 2, **caractérisé en ce que**, dans ladite première étape de mélange, le mélange comprend 1 à 20 phr d'un agent de couplage du type silane faisant partie de la classe des trialkoxymercaptoalkyl-silane.

4. Procédé de production d'une composition de caoutchouc suivant l'une des revendications précédentes, **caractérisé en ce que** ledit agent de couplage du type silane est utilisé sous forme adsorbée sur 0,5 à 6 phr dudit disulfure de dibenzothiazyle.

5. Procédé de production d'une composition de caoutchouc suivant l'une des revendications précédentes, **caractérisé en ce que** ledit agent de couplage du type silane est également utilisé sous forme adsorbée sur 5 à 10 phr de noir de carbone.

6. Procédé de production d'une composition de caoutchouc suivant l'une des revendications précédentes, **caractérisé en ce que** ledit agent de couplage du type silane répond à la formule (I)
R¹R²₂Si-R³-SH (I)
dans laquelle :
R¹ représente un groupe alkoxyle linéaire, cyclique ou ramifié ayant 1 à 8 atomes de carbone ; R² représente un groupe alkoxyle linéaire, cyclique ou ramifié ayant 1 à 8 atomes de carbone, ou un groupe -O-(Y-O)m4-X (dans lequel Y représente un groupe hydrocarboné divalent linéaire, cyclique ou ramifié, saturé ou insaturé, ayant 1 à 20 atomes de carbone, X représente un groupe alkyle linéaire, cyclique ou ramifié ayant 1 à 9 atomes de carbone, et m4 représente un nombre de 1 à 40) ; et R³ représente un groupe alkylène linéaire, cyclique ou ramifié, saturé ou insaturé, ayant 1 à 12 atomes de carbone.

7. Procédé de production d'une composition de caoutchouc suivant la revendication 6, **caractérisé en ce que** ledit agent de couplage du type silane fait partie de la classe des trialkoxymercaptopropyl-silanes.

8. Procédé de production d'une composition de caoutchouc suivant la revendication 7, **caractérisé en ce que** ledit agent de couplage du type silane répond à la formule (II)
SH(CH₂)₃SiR⁴R⁵₂ (II)
dans laquelle :
R⁴ représente un groupe -OCH₂CH₃, et
R⁵ représente un groupe -O(CH₂CH₂O)₅(CH₂)₁₃CH₃.

9. Composition pour bande de roulement, **caractérisée en ce qu'**elle est produite en utilisant le procédé suivant l'une des revendications précédentes.

10. Bande de roulement, **caractérisée en ce qu'**elle est produite à partir de la composition suivant la revendication 9.

11. Bandage de pneumatique comprenant une bande de roulement suivant la revendication 10.
